(19) Europäisches Patentamt
European Patent Office
Office européen des brevets

(11) **EP 4 252 565 A1**

(12) **EUROPEAN PATENT APPLICATION**
published in accordance with Art. 153(4) EPC

(43) Date of publication:
**04.10.2023 Bulletin 2023/40**

(51) International Patent Classification (IPC):
**A24F 40/40** (2020.01)    **G06F 3/044** (2006.01)
**A24F 40/50** (2020.01)    **A24F 40/60** (2020.01)

(21) Application number: **21896786.7**

(86) International application number:
**PCT/CN2021/129885**

(22) Date of filing: **10.11.2021**

(87) International publication number:
**WO 2022/111285 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2020 CN 202011334290**

(71) Applicant: **Shenzhen Smoore Technology Limited Shenzhen, Guangdong 518102 (CN)**

(72) Inventors:
• **TAN, Hua**
  **Shenzhen, Guangdong 518102 (CN)**
• **CHEN, Tao**
  **Shenzhen, Guangdong 518102 (CN)**
• **YE, Xiaowei**
  **Shenzhen, Guangdong 518102 (CN)**
• **LUO, Kuizhang**
  **Shenzhen, Guangdong 518102 (CN)**

(74) Representative: **De Arpe Tejero, Manuel Arpe Patentes y Marcas Alcalá, 26, 5ª Planta 28014 Madrid (ES)**

(54) **BATTERY ROD FOR ELECTRONIC ATOMIZATION, AND ELECTRONIC ATOMIZATION DEVICE**

(57)    A battery rod (42) for electronic atomization, and an electronic atomization device (40). The battery rod can cooperate with an atomizer (41) to achieve electronic atomization and comprises: a housing (11), the housing (11) being provided with a touch region (12), and the touch region (12) being non-conducting; a touch sensing electrode (13), which is located in the housing (11) and arranged corresponding to the touch region (12), the touch sensing electrode (13) generating different capacitance values when different positions of the touch region (12) are touched; and a control chip (14), which is located in the housing (11), connected to the touch sensing electrode (13), and used to measure the capacitance values at different positions in the touch sensing electrode (13) and generate a control instruction according to the measurement result so as to control the battery rod (42) to perform corresponding operations. A single-channel multi-touch solution of a battery rod (42) can be achieved, and the cost can be reduced.

FIG. 1

EP 4 252 565 A1

## Description

### CROSS REFERENCE TO RELATED APPLICATIONS

The present disclosure claims priority to Chinese patent application NO. 202011334290.5 filed on November 24, 2020, the entire contents of which are herein incorporated by reference in their entireties.

### TECHNICAL FIELD

The present disclosure relates to the technical field of atomization, in particular to a battery rod for electronic atomization and an electronic atomization device.

### BACKGROUND

The multi-touch of an existing electronic atomization device generally uses a plurality of sensing points to achieve a multi-point detection, which requires a touch chip to have a plurality of touch channels. The complexity of a circuit board of an electronic atomization device is increased, and a circuit cost is also increased.

### SUMMARY

The present disclosure provides a battery rod and an electronic atomization device to realize a single-channel multi-touch solution of the battery rod. The battery rod and the electronic atomization device may reduce the cost.

To solve the above technical problem, the first technical solution provided by the present disclosure is to provide a battery rod for electronic atomization. The battery rod is configured to cooperate with an atomizer to realize the electronic atomization and includes: a housing, having a touch region, and the touch region being non-conductive; a touch sensing electrode, located in the housing, arranged facing the touch region, and configured to generate different capacitance values in response to different positions of the touch region being touched; and a control chip, located in the housing, connected to the touch sensing electrode, and configured to detect the capacitance values at different positions of the touch sensing electrode, generate a control instruction according to a detection result, and control the operations of the battery rod.

In some embodiments, the touch sensing electrode includes a plurality of touch sensing regions, and the overlapping area of one of the plurality of touch sensing regions and the orthographic projection of the touch region on the touch sensing electrode is different from the overlapping area of another of the plurality of touch sensing regions and the orthographic projection of the touch region on the touch sensing electrode.

In some embodiments, the touch sensing electrode includes a plurality of touch sensing regions, and the overlapping area of one of the plurality of touch sensing regions and the orthographic projection of the touch region on the touch sensing electrode is the same as the overlapping area of another of the plurality of touch sensing regions and the orthographic projection of the touch region on the touch sensing electrode.

In some embodiments, the distance between one of the plurality of touch sensing regions and a part of the touch region facing the one of the plurality of touch sensing regions is the same as the distance between another of the plurality of touch sensing regions and a part of the touch region facing the another of the plurality of touch sensing regions.

In some embodiments, the overlapping areas of the plurality of touch sensing regions and the orthographic projection of the touch region on the touch sensing electrode gradually decrease along the extending direction of the touch region.

In some embodiments, the touch sensing electrode is arranged obliquely with respect to the touch region.

In some embodiments, the distance between one of the plurality of touch sensing regions and a part of the touch region facing the one of the plurality of touch sensing regions is different from the distance between another of the plurality of touch sensing regions and a part of the touch region facing the another of the plurality of touch sensing regions.

In some embodiments, the battery rod further includes: a circuit board, located in and insulated from the housing, and at least one selected from the group consisting of the touch sensing electrode and the control chip being integrated on the circuit board.

In some embodiments, the touch sensing electrode is a pad or a sliding-strip sensor arranged on the circuit board.

To solve the above technical problem, the second technical solution provided by the present disclosure is to provide an electronic atomization device. The electronic atomization device includes an atomizer and the battery rod described above. The battery rod is configured to supply power for the atomizer.

Beneficial effects of the present disclosure are as follows. The battery rod provided by some embodiments of the present disclosure is configured to cooperate with an atomizer to realize the electronic atomization and includes: a housing, having a touch region, and the touch region being non-conductive; a touch sensing electrode, located in the housing, arranged facing the touch region, and configured to generate different capacitance values in response to different positions of the touch region being touched; and a control chip, located in the housing, connected to the touch sensing electrode, and configured to detect the capacitance values at different positions of the touch sensing electrode, generate a control instruction according to a detection result, and control the operations of the battery rod. A single-channel multi-touch solution of the battery rod may be achieved, and the cost may be reduced.

## BRIEF DESCRIPTION OF THE DRAWINGS

FIG. 1 is a structural schematic view of a battery rod according to some embodiments of the present disclosure.

FIG. 2a and 2b are top schematic views of a touch sensing electrode according to the embodiments shown in FIG. 1.

FIG. 3 is a structural schematic view of the battery rod according to some embodiments of the present disclosure.

FIG. 4 is a top schematic view of the touch sensing electrode according to the embodiments shown in FIG. 3.

FIG. 5 is a structural schematic view of the battery rod according to some embodiments of the present disclosure.

FIG. 6 is a top schematic view of the touch sensing electrode according to the embodiments shown in FIG. 5.

FIG. 7 is a structural schematic view of an electronic atomization device according to some embodiments of the present disclosure.

## DETAILED DESCRIPTIONS

The technical solutions in the embodiments of the present disclosure will be described clearly and completely with reference to the figures in the embodiments of the present disclosure. Obviously, the described embodiments are only a part of the embodiments of the present disclosure, rather than all of them. Based on the embodiments of the present disclosure, all other embodiments obtained by those skilled in the art without any creative work are within the scope of the present disclosure.

In the following descriptions, specific details, such as specific system structure, interface, technology, etc., are proposed for explanation rather than limitation, so as to thoroughly understand the present disclosure.

The term "and/or" in the present disclosure is just a kind of associate relationship describing associate objects, which means that there may be three kinds of relationships. For example, A and/or B may mean that there are three cases: A exists alone, both A and B exist, and B exists alone. In addition, the character "/" in the present disclosure generally indicates that the associate objects before "/" and after "/" have an "or" relationship. In addition, "a plurality of" in the present disclosure means two or more.

The terms "first", "second", and "third" in the embodiments of the present disclosure are only used for descriptive purposes, and cannot be understood as indicating or implying relative importance or implicitly indicating the number of indicated technical features. Thus, the features defined with "first", "second", and "third" may explicitly or implicitly include at least one of the features. In the description of the present disclosure, "a plurality of" means at least two, e. g., two, three, etc., unless specifically defined otherwise. All directional indications (such as up, down, left, right, front, back) in the embodiments of the present disclosure are only used to account for relative positional relationships, motion conditions, etc., between components in a particular orientation (as shown in the drawings), if the particular orientation changes, the directional indications correspondingly change. In addition, the terms "including" and "having" and any variations thereof are intended to cover non-exclusive inclusions. For example, a process, method, system, product, or device that includes a series of steps or units is not limited to the listed steps or units, but optionally includes unlisted steps or units, or optionally also includes other steps or units inherent to the process, method, product or device.

Mentioning "embodiments" herein means that a specific feature, structure, or characteristic described in conjunction with the embodiments may be included in at least one embodiment of the present disclosure. The appearances of the phrase in various places in the specification are not necessarily all referring to the same embodiment, nor are separate or alternative embodiments mutually exclusive of other embodiments. It is explicitly and implicitly understood by those skilled in the art that the embodiments described herein may be combined with other embodiments.

The multi-touch of an existing electronic atomization device may generally be achieved in two ways. In one way, a touch chip senses the touch points of a plurality of channels, and the plurality of channels communicate with a Microcontroller Unit (MCU) through the touch chip, which requires to occupy two IO ports to communicate with the MCU and requires a plurality of touch channels; in this way, the cost is high, the design of a circuit board is relatively complex, and the interference is prone to occur between the channels. In the other way, a plurality of touch-channel signals are output in parallel to the MCU, which will occupy a plurality of IO resources; in this way, the IO resources of the MCU is insufficient, a larger packaging structure is needed, a circuit cost is increased, the area of the circuit board is also increased, and the electronic atomization device is difficult to have a small volume. Some embodiments of the present disclosure provide a battery rod and an electronic atomization device. The battery rod and the electronic atomization device may realize a single-channel multi-touch solution, reduce the area of the circuit board, reduce the cost, and realize a small volume structure. The following is a detailed description in combination with the figures and some embodiments.

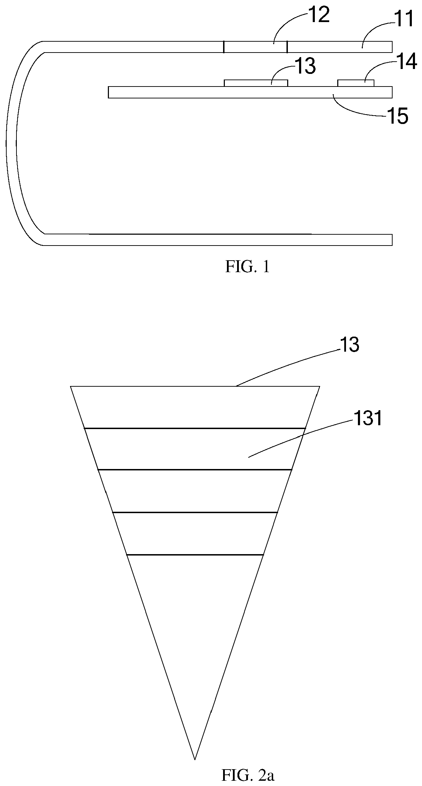

As shown in FIG. 1, FIG. 1 is a structural schematic view of a battery rod according to some embodiments of the present disclosure. In some embodiments, the battery rod includes a housing 11 having a touch region 12, a portion of the housing 11 is defined as the touch region 12, and the touch region 12 is made of an insulating material. In some embodiments, the other portion (i.e., the body portion) of the housing 11 may be made of a conductive material, while the touch region 12 of the housing 11 is made of insulating material. In some embodiments, the body portion of the housing 11 may be made of metal or a conductive plastic material, while the touch region 12 of the housing 11 is made of an insulating plastic material. It can be understood that, the housing 11 may also be made of an insulating material, such as an insulating plastic material, as a whole, and the housing 11 may has a mark in the touch region 12, to mark out the touch region 12, which is not limited in the present disclosure, as long as the touch region 12 is made of an insulating material.

The battery rod further includes a touch sensing electrode 13. The touch sensing electrode 13 is located in the housing 11 and is arranged facing the touch region 12. As different positions of the touch region 12 are touched, the touch sensing electrode 13 is configured to generate different capacitance values. In some embodiments, the touch sensing electrode 13 may be arranged on a circuit board 15. It can be understood that, the touch sensing electrode 13 may also be arranged independently. A control chip 14 is located in the housing 11 and connected to the touch sensing electrode 13. The control chip 14 is configured to detect the capacitance values at different positions of the touch sensing electrode 13, generate a control instruction according to a detection result, and control the operations of the battery rod. For example, the control chip 14 may be an MCU. Similar to the touch sensing electrode 13, the control chip 14 may be integrated on the circuit board 15 and electrically connected to the touch sensing electrode 13 through the circuit structure of the circuit board 15. In some embodiments, the touch sensing electrode 13 is independently arranged, while the control chip 14 is integrated on the circuit board 15. The touch sensing electrode 13 is connected to the control chip 14 through a wire, such that the control chip may detect the capacitance values of the touch sensing electrode 13.

In some embodiments, the detection principle of a touch key is achieved by detecting the change of the capacitance value. In case that a surrounding environment remains unchanged, the capacitance value of the touch sensing electrode 13 is a very small constant value. As a finger touches the touch region 12, the capacitance value of the touch sensing electrode 13 will change, and touch control is achieved by detecting the capacitance value of the touch sensing electrode 13.

The capacitance value between plate capacitors is proportional to the contact area and inversely proportional to the contact distance. Specifically, the capacitance value between the plate capacitors may be acquired by the following formular:

$$C = K \,' \, \frac{S}{D}$$

. Herein, K is the dielectric constant, S is the contact area (i.e., the area of the projection of the finger on the touch sensing electrode 13), and D is the distance between two electrode plates of the capacitor.

In order to realize the multi-touch, in some embodiments of the present disclosure, the area of the projection of the finger on the touch sensing electrode 13 changes, so that the capacitance value detected by the control chip 14 changes. That is, the control chip 14 may generate different control instructions according to the different capacitance values detected each time, to control the operations of the battery rod.

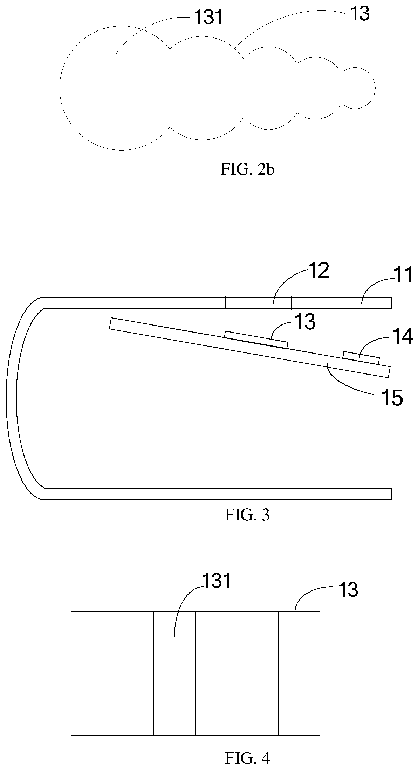

In some embodiments, the touch sensing electrode 13 includes a plurality of touch sensing regions 131. The plurality of touch sensing regions 131 may be connected to each other or independent from each other. The areas of the plurality of touch sensing regions 131 are different from each other. In some embodiments, the overlapping area of one of the plurality of touch sensing regions 131 and the orthographic projection of the touch region 12 on the touch sensing electrode 13 is different from the overlapping area of another of the plurality of touch sensing regions 131 and the orthographic projection of the touch region 12 on the touch sensing electrode 13. In some embodiments, the overlapping areas of the plurality of touch sensing regions 131 and the orthographic projection of the touch region 12 on the touch sensing electrode 13 gradually decrease in the extending direction of the touch region 12. In some embodiments shown in FIG. 2a and 2b, as shown in FIG. 2a, the touch sensing electrode 13 may be triangle-shaped. The touch sensing electrode 13 includes the plurality of touch sensing regions 131. The areas of the plurality of touch sensing regions 131 decrease in sequence. It may be understood that, as the finger of a user touches the sensing region 12, the overlapping area of the projection of the finger on the touch sensing electrode 13 and one of the plurality of touch sensing regions 131 of the touch sensing electrode 13 is different from the overlapping area of the projection of the finger on the touch sensing electrode 13 and another of the plurality of touch sensing regions 131 of the touch sensing electrode 13. In this may, as the finger touches different positions of the touch region 12, the control chip 14 may detect different capacitance values, and output different control instructions according to the different capacitance values to achieve a single-channel multi-touch solution. It can be understood that, as the finger touches the touch region 12, capacitors may be generated in several of the touch sensing regions 131 at the same time. The control chip 14 may detect several capacitance values, select the position of the touch region 12 corresponding to or facing the touch sensing region 131 with the largest capacitance value as the position to be touched by the user, and output the corresponding control instruction. In some embodiments, the touch sensing electrode 13 shown in FIG. 2a may be a sliding-strip sensor. The sliding-strip sensor may be arranged independently from the circuit board 15 or integrated on the circuit board 15. In some embodiments, the touch sensing electrode 13 may also be trapezoid-shaped, which is not limited herein.

In some embodiments, as shown in FIG. 2b, the touch sensing electrode 13 may also be a metal pad arranged on the circuit board 15. In some embodiments, the touch sensing electrode 13 includes a plurality of round pads. Each pad forms a touch sensing region 131. It can be understood that the areas of the pads (i.e., the touch sensing regions 131) are different from each other, such that the overlapping area of one of the pads and the orthographic projection of the touch region 12 on the touch sensing electrode 13 is different from the overlapping area of another of the pads and the orthographic projection of the touch region 12 on the touch sensing electrode 13. As shown in FIG. 2b, the areas of the touch sensing regions 131 are reduced from left to right in sequence, such that as the finger of the user touches the sensing region 12, the overlapping area of the projection of the finger on the touch sensing electrode 13 and one of the touch sensing regions 131 of the touch sensing electrode 13 is different from the overlapping area of the projection of the finger on the touch sensing electrode 13 and another of the touch sensing regions 131 of the touch sensing electrode 13. In this way, as the finger touches different positions of the touch region 12, the control chip 14 may detect different capacitance values, and output different control instructions according to the different capacitance values, to achieve the single-channel multi-touch solution. It can be understood that, as the finger touches the touch region 12, capacitors may be generated in several of the touch sensing regions 131 at the same time. The control chip 14 may detect several capacitance values, select the touch sensing region 131 with the largest capacitance value, and output the corresponding control instruction.

In some embodiments, the touch sensing electrode 13 is arranged in parallel with the touch region 12. That is, the vertical distance between one of the touch sensing regions 131 of the touch sensing electrode 13 and a part of the touch region 12 at the corresponding position facing the one of the touch sensing regions 131 is the same as the vertical distance between another of the touch sensing regions 131 of the touch sensing electrode 13 and a part of the touch region 12 at the corresponding position facing the another of the touch sensing regions 131. In some embodiments, the vertical distance between one of the touch sensing regions 131 of the touch sensing electrode 13 and the touch region 12 may also be arranged to be different from the vertical distance between another of the touch sensing regions 131 of the touch sensing electrode 13 and the touch region 12. It is necessary to ensure that, the capacitance values of the touch sensing regions 131 of the touch sensing electrode 13 are different from each other as the finger touches any position of the sensing region 12.

The battery rod described in some embodiments is configured to change the overlapping area of the projection of the finger on the touch sensing electrode 13 and each touch sensing region 131 of the touch sensing electrode 13 as the finger touches the touch region 12 of the electronic atomization device, such that the control chip 14 may detect the capacitance values at different positions and output different control instructions. In this way, the single-channel multi-touch solution may be realized, and the solution may reduce the system cost and the size of the circuit board.

As shown in FIG. 3, FIG. 3 is a structural schematic view of the battery rod according to some embodiments of the present disclosure. Different from the above embodiments shown in FIG. 1, in some embodiments, the areas of the touch sensing regions of the touch sensing electrode 13 are the same as each other. In some embodiments, the touch sensing electrode 13 may be rectangle-shaped, as shown in FIG. 4. The areas of the touch sensing regions 131 of the touch sensing electrode 13 are the same as each other, such that as the finger touches the touch region 12, the overlapping area of the projection of the finger on the touch sensing electrode 13 and each touch sensing region 131 of the touch sensing electrode 13 doesn't change. Furthermore, in some embodiments, in order to enable the control chip 14 to detect different capacitance values as the finger touches the touch region 12, the touch sensing electrode 13 is arranged obliquely, such that the vertical distance between one of the touch sensing regions 131 of the touch sensing electrode 13 and a part of the touch region 12 at the corresponding position facing the one of the touch sensing regions 131 is different from the vertical distance between another of the touch sensing regions 131 of the touch sensing electrode 13 and a part of the touch region 12 at the corresponding position facing the another of the touch sensing regions 131. In some embodiments, as shown in FIG. 3, in case that the touch sensing electrode 13 is arranged on the circuit board 15, the circuit board 15 is arranged obliquely, such that the touch sensing electrode 13 is also arranged obliquely. In some embodiments, in case that the touch sensing electrode 13 is arranged independently from the circuit board 15, the circuit board 15 may be arranged in parallel with the touch region 12, and only the touch sensing electrode 13 is arranged obliquely. In some embodiments, the touch sensing electrode 13 may be a rectangular sliding-strip sensor.

The battery rod described in some embodiments is configured to change the distance between the finger and the touch sensing electrode 13 as the finger touches the touch region 12, such that the control chip 14 may detect capacitance values at different positions, and output different control instructions. In this way, the single-channel multi-touch solution may be realized, and the solution may reduce the system cost and the size of the circuit board 15.

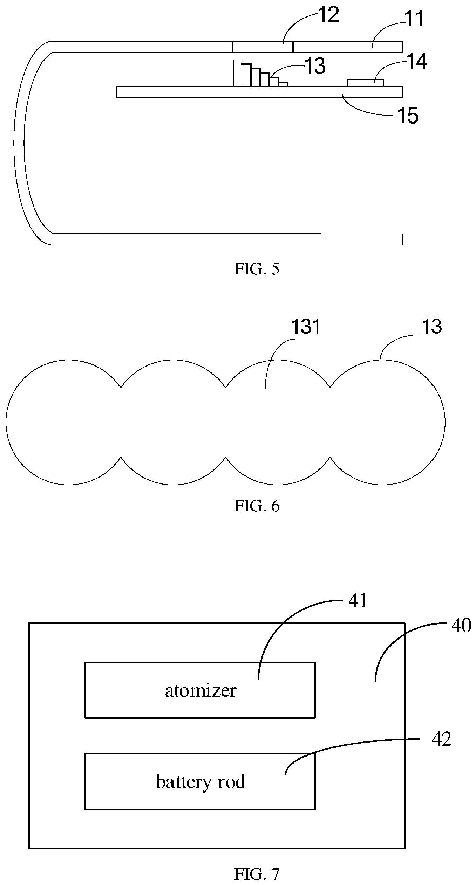

As shown in FIG.5, FIG. 5 is a structural schematic view of the battery rod according to some embodiments of the present disclosure. Different from the embodiments shown in FIG. 1, in some embodiments, the areas of the touch sensing regions of the touch induction electrode 13 are the same as each other. In some embodiments, the touch sensing electrode 13 may be pads arranged on the circuit board 15, as shown in FIG. 6. The areas of the touch sensing regions 131 of the touch sensing electrode 13 are the same as each other. In some embodiments, the overlapping area of one of the plurality of touch sensing regions 131 and the orthographic projection of the touch region 12 on the touch sensing electrode 13 is the same as the overlapping area of another of the plurality of touch sensing regions 131 and the orthographic projection of the touch region 12 on the touch sensing electrode 13, such that as the finger touches the touch region 12, the overlapping area of the projection of the finger on the touch sensing electrode 13 and each touch sensing region 131 of the touch sensing electrode 13 doesn't change. Furthermore, in some embodiments, in order to enable the control chip 14 to detect different capacitance values as the finger touches the touch region 12, the thicknesses of the pads (i.e., the touch sensing regions 131) in the direction perpendicular to the touch region 12 are different from each other, as shown in FIG. 5. In this way, the vertical distance between one of the touch sensing regions 131 of the touch sensing electrode 13 and the touch region 12 is different from the vertical distance between another of the touch sensing regions 131 of the touch sensing electrode 13 and the touch region 12.

In some embodiments, as shown in FIG. 3 and 5, the vertical distances between the touch sensing regions 131 of the touch sensing electrode 13 and the touch region 12 are increased in sequence. In some embodiments, the vertical distances between the touch sensing regions 131 of the touch sensing electrode 13 and the touch region 12 may also be decreased in sequence. In some embodiments, the vertical distances between the touch sensing regions 131 of the touch sensing electrode 13 and the touch region 12 may be increased in sequence and then decreased in sequence. In some embodiments, the vertical distances between the touch sensing regions 131 of the touch sensing electrode 13 and the touch region 12 may be decreased in sequence and then increased in sequence, which is not limited, as long as it is ensured that the control chip 14 may detect different capacitance values as the finger touches the touch region 12.

The battery rod described in some embodiments changes the distance between the finger and the touch sensing electrode 13 as the finger touches the touch region 12 of the electronic atomization device, such that the control chip 14 may detect capacitance values at different positions, and output different control instructions. In this way, the single-channel multi-touch solution may be realized, and the solution may reduce the system cost and the size of the circuit board.

As shown in FIG. 7, FIG. 7 is a structural schematic view of an electronic atomization device according to some embodiments of the present disclosure. The electronic atomization device 40 includes an atomizer 41 and a battery rod 42. The battery rod 42 is configured to supply power to the atomizer 41. The battery rod 42 is the battery rod 42 described in any one of the aforementioned embodiments shown in FIGS. 1-6.

Other structures of the battery rod 42 in the present disclosure are the same as those in the related art, and will not be described herein.

The above description are only embodiments of the present disclosure, and do not limit the scope of the present disclosure. Any equivalent structure or equivalent process transformation made by using the contents of the description and drawings of the present disclosure, or directly or indirectly used in other related technical fields, are similarly included in the scope of patent protection of the present disclosure.

**Claims**

1. A battery rod for electronic atomization, the battery rod being configured to cooperate with an atomizer to realize the electronic atomization and comprising:

   a housing, having a touch region, and the touch region being non-conductive;
   a touch sensing electrode, located in the housing, arranged facing the touch region, and configured to generate different capacitance values in response to different positions of the touch region being touched; and
   a control chip, located in the housing, connected to the touch sensing electrode, and configured to detect the capacitance values at different positions of the touch sensing electrode, generate a control instruction according to a detection result, and control the operations of the battery rod.

2. The battery rod according to claim 1, wherein the touch sensing electrode comprises a plurality of touch sensing regions, and the overlapping area of one of the plurality of touch sensing regions and the orthographic projection of the touch region on the touch sensing electrode is different from the overlapping area of another of the plurality of touch sensing regions and the orthographic projection of the touch region on the touch sensing electrode.

3. The battery rod according to claim 1, wherein the touch sensing electrode comprises a plurality of touch sensing regions, and the overlapping area of one of the plurality of touch sensing regions and the orthographic projection of the touch region on the touch sensing electrode is the same as the overlapping area of another of the plurality of touch sensing regions and the orthographic projection of the touch region on the touch sensing electrode.

4. The battery rod according to claim 2, wherein the distance between one of the plurality of touch sensing regions and a part of the touch region facing the one of the plurality of touch sensing regions is the same as the distance between another of the plurality of touch sensing regions and a part of the touch region facing the another of the plurality of touch sensing regions.

5. The battery rod according to claim 2, wherein the overlapping areas of the plurality of touch sensing regions and the orthographic projection of the touch region on the touch sensing electrode gradually decrease along the extending direction of the touch region.

6. The battery rod according to claim 3, wherein the touch sensing electrode is arranged obliquely with respect to the touch region.

7. The battery rod according to claim 3, wherein the distance between one of the plurality of touch sensing regions and a part of the touch region facing the one of the plurality of touch sensing regions is different from the distance between another of the plurality of touch sensing regions and a part of the touch region facing the another of the plurality of touch sensing regions.

8. The battery rod according to claim 1, further comprising:
a circuit board, located in and insulated from the housing, and at least one selected from the group consisting of the touch sensing electrode and the control chip being integrated on the circuit board.

9. The battery rod according to claim 8, wherein the touch sensing electrode is a pad or a sliding-strip sensor arranged on the circuit board.

10. An electronic atomization device, comprising an atomizer and the battery rod according to any one of claims 1-9;
wherein the battery rod is configured to supply power for the atomizer.

FIG. 1

FIG. 2a

FIG. 2b

FIG. 3

FIG. 4

FIG. 5

FIG. 6

atomizer

battery rod

FIG. 7

## INTERNATIONAL SEARCH REPORT

| | International application No. |
|---|---|
| | **PCT/CN2021/129885** |

**A. CLASSIFICATION OF SUBJECT MATTER**

A24F 40/40(2020.01)i; G06F 3/044(2006.01)i; A24F 40/50(2020.01)n; A24F 40/60(2020.01)n

According to International Patent Classification (IPC) or to both national classification and IPC

**B. FIELDS SEARCHED**

Minimum documentation searched (classification system followed by classification symbols)

A24F,G06F

Documentation searched other than minimum documentation to the extent that such documents are included in the fields searched

Electronic data base consulted during the international search (name of data base and, where practicable, search terms used)

CNABS, CNTXT, VEN: 电子烟, 电子, 雾化, 触控, 电容, 位置, 电极, 不同, 多个, 多种, 单个, 单独, 通道, electr+, cigarette, atomiz+, touch, control, electrode, capacitance, multi, single, position, channel

**C. DOCUMENTS CONSIDERED TO BE RELEVANT**

| Category* | Citation of document, with indication, where appropriate, of the relevant passages | Relevant to claim No. |
|---|---|---|
| PX | CN 112493544 A (SHENZHEN SMOORE TECHNOLOGY LIMITED) 16 March 2021 (2021-03-16)<br> description, paragraphs 3-13 | 1-10 |
| PX | CN 214257964 U (SHENZHEN SMOORE TECHNOLOGY LIMITED) 24 September 2021 (2021-09-24)<br> description, paragraphs 3-13 | 1-10 |
| Y | CN 110708973 A (BRITISH AMERICAN TOBACCO (INVESTMENTS) LIMITED) 17 January 2020 (2020-01-17)<br> description, paragraphs 24-47, figure 5 | 1-10 |
| Y | CN 103123563 A (TAIYUAN UNIVERSITY OF TECHNOLOGY) 29 May 2013 (2013-05-29)<br> description, paragraphs 5-7 | 1-10 |
| A | CN 111035071 A (NEW TRIPOD ELECTRONICS (SHENZHEN) CO., LTD.) 21 April 2020 (2020-04-21)<br> entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 January 2022** | **15 February 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/129885** |

**C.      DOCUMENTS CONSIDERED TO BE RELEVANT**

| Category* | Citation of document, with indication, where appropriate, of the relevant passages | Relevant to claim No. |
|---|---|---|
| A | CN 111227319 A (SHENZHEN KANGHONGWEI TECHNOLOGY CO., LTD.) 05 June 2020 (2020-06-05)<br>         entire document | 1-10 |
| A | CN 205052868 U (HU, Chaoqun) 02 March 2016 (2016-03-02)<br>         entire document | 1-10 |
| A | CN 208837107 U (SHENZHEN HAIPAITE TECHNOLOGY CO., LTD.) 10 May 2019 (2019-05-10)<br>         entire document | 1-10 |
| A | US 2014062934 A1 (SHARP KABUSHIKI KAISHA) 06 March 2014 (2014-03-06)<br>         entire document | 1-10 |
| A | US 9626045 B1 (Atmel Corporation) 18 April 2017 (2017-04-18)<br>         entire document | 1-10 |

Form PCT/ISA/210 (second sheet) (January 2015)

**INTERNATIONAL SEARCH REPORT**
Information on patent family members

International application No.

**PCT/CN2021/129885**

| Patent document cited in search report | | | Publication date (day/month/year) | Patent family member(s) | | | Publication date (day/month/year) |
|---|---|---|---|---|---|---|---|
| CN | 112493544 | A | 16 March 2021 | None | | | |
| CN | 214257964 | U | 24 September 2021 | None | | | |
| CN | 110708973 | A | 17 January 2020 | EP | 3850965 | A1 | 21 July 2021 |
| | | | | US | 2021084986 | A1 | 25 March 2021 |
| | | | | RU | 2732090 | C1 | 11 September 2020 |
| | | | | WO | 2018185460 | A1 | 11 October 2018 |
| | | | | PL | 3606365 | T3 | 15 November 2021 |
| | | | | BR | 112019021033 | A2 | 12 May 2020 |
| | | | | KR | 20190119646 | A | 22 October 2019 |
| | | | | GB | 201705550 | D0 | 24 May 2017 |
| | | | | JP | 2020515270 | A | 28 May 2020 |
| | | | | EP | 3606365 | A1 | 12 February 2020 |
| | | | | EP | 3606365 | B1 | 05 May 2021 |
| | | | | CA | 3058849 | A1 | 11 October 2018 |
| | | | | ES | 2877074 | T3 | 16 November 2021 |
| CN | 103123563 | A | 29 May 2013 | CN | 103123563 | B | 03 February 2016 |
| CN | 111035071 | A | 21 April 2020 | None | | | |
| CN | 111227319 | A | 05 June 2020 | WO | 2021184964 | A1 | 23 September 2021 |
| CN | 205052868 | U | 02 March 2016 | None | | | |
| CN | 208837107 | U | 10 May 2019 | None | | | |
| US | 2014062934 | A1 | 06 March 2014 | US | 9182859 | B2 | 10 November 2015 |
| US | 9626045 | B1 | 18 April 2017 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011334290